# EUROPÄISCHE PATENTSCHRIFT

(11) **EP 2 236 361 B1**
(45) Veröffentlichungstag und Bekanntmachung des Hinweises auf die Patenterteilung: **20.07.2016**
(21) Anmeldenummer: 09004751.5
(22) Anmeldetag: 31.03.2009
(51) Int. Cl.: B60R 21/205

(54) **Luftsackbaugruppe**
Airbag component assembly
Module de coussin d'air

(43) Veröffentlichungstag der Anmeldung: 06.10.2010
(73) Patentinhaber: Autoliv Development AB, 447 83 Vårgårda (SE)
(72) Erfinder: Lutter, Gerhard, 16562 Bergfelde (DE); Crohn, Detlef, 13158 Berlin (DE)
(74) Vertreter: Schön, Thilo

(56) Entgegenhaltungen:
- EP-A- 1 908 643
- EP-A1- 1 481 855
- EP-A1- 2 221 224
- DE-A1- 10 253 402
- DE-A1- 19 845 777
- GB-A- 2 328 393
- JP-A- 2002 225 664
- US-A- 5 425 549
- US-A1- 2008 007 032

## Beschreibung

Die vorliegende Erfindung betrifft eine Baugruppe mit einer Luftsackbaugruppe zur Aufnahme und Positionierung eines gefalteten Luftsacks an der dem Fahrgastraum abgewandten Seite einer Armaturentafel gemäß dem Oberbegriff des Anspruchs 1, wie sie aus der JP 2002-225664A bekannt geworden ist.

Derartige Luftsackbaugruppen, welche dazu dienen, um im Crashfall den Aufprall beispielsweise des Beifahrers und insbesondere dessen Oberkörper auf die Armaturentafel abzufedern und zu dämpfen, weisen üblicherweise einen allseits geschlossenen, starren Gehäusekasten auf der dem Fahrgastraum abgewandten Seite der Armaturentafel auf, welcher den sich im Crashfall ausdehnenden Luftsack aufnimmt. Aufgrund der Unterbringung in solch einem steifen bzw. starren Gehäusekasten muss auf der dem Fahrgastraum abgewandten Seite der Armaturentafel ausreichend Bauraum zur Aufnahme des Gehäusekastens vorgesehen werden. Insbesondere muss auf der dem Fahrgastraum abgewandten Seite der Armaturentafel ausreichend Platz zur Verfügung stehen, um den starren Gehäusekasten überhaupt während der Montage an seine Endposition bringen zu können. Es geht somit insgesamt verhältnismäßig viel Raum auf der Rückseite der Armaturentafel nur für die Unterbringung des Luftsacks bzw. dessen Gehäusekastens verloren.

Da derartige starre Luftsackgehäusekästen außerdem in unerwünschter Weise aufgrund ihrer im Wesentlichen allseits geschlossenen Ausbildung das Gesamtgewicht eines Kraftfahrzeugs erhöhen, erweisen sich bekannte Systeme unter Verwendung starrer Gehäusekästen sowohl in kraftstoffwirtschaftlicher Hinsicht als auch in produktionswirtschaftlicher Hinsicht als unvorteilhaft.

Der Erfindung liegt daher die Aufgabe zugrunde, eine Baugruppe mit einer Luftsackbaugruppe zur Aufnahme und Positionierung eines gefalteten Luftsacks an der dem Fahrgastraum abgewandten Seite einer Armaturentafel zu schaffen, mit der zumindest einem der zuvor genannten Probleme begegnet werden kann.

Erfindungsgemäß wird daher eine Baugruppe vorgeschlagen, welche die Merkmale des Anspruchs 1 aufweist.

Die Luftsackbaugruppe der erfindungsgemäßen Baugruppe weist eine aus einem Gewebematerial gefertigte Hülle auf, welche beispielsweise eine annähernd quaderförmige oder schlauchartige Gestalt aufweisen kann, um einen gefalteten Luftsack aufzunehmen. Außerdem weist die Luftsackbaugruppe einen stabförmigen Gasgenerator auf, welcher derart mit dem Luftsack in Wirkverbindung steht, dass dieser durch Gase, welche von dem Gasgenerator im Falle seiner Aktivierung erzeugt werden können, aufgeblasen werden kann. Darüber hinaus umfasst die erfindungsgemäße Luftsackbaugruppe einen oder mehrere Zuganker, über den bzw. die die Druckkräfte, die infolge des Ausdehnens des Luftsacks auf die Armaturentafel einwirken, zumindest teilweise in Form von Zugkräften auf eine von der Armaturentafel verkleidete Fahrzeugtragstruktur wie beispielsweise einen Querträger des Fahrzeugrahmens übertragen werden können.

Der Gasgenerator der Luftsackbaugruppe ist von zumindest einer Schelle oder einer Schlaufe umgeben, über die der Gasgenerator mit der Fahrzeugstruktur verbunden ist. Das Gewicht des Gasgenerators lastet somit nicht in unerwünschter Weise auf der Luftsackaufnahmehülle, wodurch sich diese verformen könnte. Durch die Rückverankerung des Gasgenerators mit Hilfe einer Schelle oder Schlaufe an der Fahrzeugtragstruktur lastet somit nicht das gesamte Gewicht des Gasgenerators auf der Luftsackaufnahmehülle, welche ihrerseits an der Armaturentafel befestigt ist; vielmehr wird der größte Teil des Gewichts des Gasgenerators von der Fahrzeugtragstruktur aufgenommen, sodass keine Verformung der Luftsackaufnahmehülle sowie der Armaturentafel durch das Gewicht des Gasgenerators auftreten kann.

Die Befestigung des Gasgenerators mit Hilfe einer Schelle oder Schlaufe an einer Fahrzeugtragstruktur erweist sich ferner dahingehend als vorteilhaft, dass dadurch die Druckkräfte, die während der Aktivierung des Gasgenerators infolge des sich ausdehnenden Luftsacks auf die Armaturentafel einwirken, auch über den Gasgenerator, welcher seinerseits mit der Armaturentafel über die Luftsackaufnahmehülle zugfest verbunden sein kann, teilweise in Form von Zugkräften zurück in die Fahrzeugtragstruktur rückverankert werden, wodurch sich eine unerwünschte Verformung der Armaturentafel weiter reduzieren lässt.

Die aus einem Gewebematerial gefertigte Luftsackaufnahmehülle weist zwei quer zu ihrer Längsrichtung voneinander beabstandete Gewebeabschnitte auf, über die die Luftsackaufnahmehülle an der Armaturentafel befestigt ist. Die bei der Aktivierung des Gasgenerators infolge der Ausdehnung des Luftsacks auf die Luftsackaustrittsklappe einwirkenden Druckkräfte können somit zumindest teilweise in Form von Zugkräften über die in Rede stehenden Gewebeabschnitte auf die Luftsackaufnahmehülle und von dort über den Gasgenerator bzw. dessen Schellen in die Fahrzeugtragstruktur übertragen werden.
Dadurch, dass die erfindungsgemäße Luftsackbaugruppe anstelle eines starren Gehäusekastens eine aus einem Gewebematerial gefertigte weiche und flexible Hülle zur Aufnahme des Luftsacks aufweist, kann die erfindungsgemäße Luftsackbaugruppe auch bei verhältnismäßig beengten Platzverhältnissen mühelos montiert und in seine Endposition während der Montage gebracht werden, da die Hülle anders als die bekannten starren Luftsackgehäusekästen während der Montage leicht zusammengedrückt und verformt werden kann. Darüber hinaus weist die aus einem Gewebematerial gefertigte Hülle der erfindungsgemäßen Luftsackbaugruppe ein geringeres Gewicht als ein vergleichbarer starrer Gehäusekasten auf, was sich aufgrund der erzielten Gewichtsersparnis insbesondere in kraftstoffwirtschaftlicher Hinsicht als vorteilhaft erweist. Darüber hinaus erweist sich die erfindungsgemäße Luftsackbaugruppe auch in produktionswirtschaftlicher Hinsicht als vorteilhaft, da das Gewebematerial, aus dem die quader- oder schlauchartige Luftsackaufnahmehülle gefertigt ist, weniger kostenintensiv als ein vergleichbarer starrer Gehäusekasten ist.

Da es im Crashfall wichtig ist, dass der Luftsack, welcher durch den Gasgenerator aufgeblasen wird, eine Druckkraft gezielt auf eine in der Armaturentafel ausgebildete Luftsackaustrittsklappe aufbringt, damit diese entlang einer Sollbruchstelle aufreißen kann, ist es bei der erfindungsgemäßen Luftsackbaugruppe vorgesehen, dass der zumindest eine Zuganker derart in Wirkverbindung mit der Armaturentafel und der durch diese verkleidete Fahrzeugtragstruktur steht, dass Druckkräfte, die infolge des Ausdehnens des Luftsacks auf die Armaturentafel vor dem Aufplatzen der Luftsackaustrittsklappe auf diese einwirken, zumindest teilweise, vorzugsweise größtenteils in Form von Zugkräften auf die von der Armaturentafel verkleidete Fahrzeugtragstruktur übertragen werden. Hierdurch kann sichergestellt werden, dass die Druckkräfte nicht etwa über die Luftsackaustrittsklappe an benachbarte Bereiche der Armaturentafel übertragen werden, was durch deren so hervorgerufene Verformung ein verspätetes und/oder unkontrolliertes Öffnen der Luftsackaustrittsklappe zur Folge haben könnte.

Dadurch, dass durch den zumindest einen Zuganker die Druckkräfte, die bei der Aktivierung des Gasgenerators infolge des Ausdehnens des Luftsacks auf die Armaturentafel einwirken, in Form von Zugkräften auf eine von der Armaturentafel verkleidete Fahrzeugstruktur übertragen werden, wird somit einer unkontrollierbaren Verformung der an die Luftsackaustrittsklappe angrenzenden Bereiche der Armaturentafel entgegengewirkt, womit ein stets gleich bleibendes, reproduzierbares und im Voraus berechenbares Öffnungsverhalten der Luftsackaustrittsklappe erreicht werden kann.

Vorteilhafte Ausführungsformen der erfindungsgemäßen Luftsackbaugruppe ergeben sich aus den Unteransprüchen, der folgenden Beschreibung sowie den Zeichnungen.

So ist es gemäß einer Ausführungsform vorgesehen, dass mehrere Zuganker die Luftsackaufnahmehülle beflankend, vorzugsweise auf einander gegenüberliegenden Seiten der Luftsackaufnahmehülle angeordnet sind. Dadurch, dass die Zuganker die Luftsackaufnahmehülle seitlich beflanken und somit in Anlage mit dieser stehen, kann einer Verformung der Gestalt der Luftsackaufnahmehülle während des laufenden Fahrbetriebs entgegengewirkt werden, sodass sicher gestellt ist, dass der von der Luftsackaufnahmehülle aufgenommene Luftsack seine Faltung nicht verlieren kann. Darüber hinaus kann dadurch, dass die Zuganker die Luftsackaufnahmehülle seitlich beflanken, verhindert werden, dass der sich im Crashfall expandierende Luftsack auf der dem Fahrgastraum abgewandten Seite der Armaturentafel entfalten kann. Die Zuganker dienen somit gewissermaßen als Positionierungshilfe und Widerlager für den sich expandierenden Luftsack, sodass dieser im Crashfall zielgerichtet durch die in der Armaturentafel ausgebildete Klappe in dem Fahrgastraum eintreten und sich dort entfalten kann.

Zwar kann es sich als vorteilhaft erweisen, wenn der zumindest eine Zuganker die infolge des Ausdehnens des Luftsacks auf die Armaturentafel einwirkenden Druckkräfte unmittelbar bzw. direkt auf die Fahrzeugtragstruktur in Form von Zugkräften überträgt, indem der zumindest eine Zuganker die Armaturentafel direkt mit der Fahrzeugtragstruktur verbindet, da hierdurch infolge der Kraftübertragung verursachte Verformungen gering gehalten werden können.

Alternativ hierzu kann es jedoch auch von Vorteil sein, wenn der zumindest eine Zuganker die Armaturentafel mit beispielsweise der den Gasgenerator aufnehmenden Schelle verbindet, welche ihrerseits an der Fahrzeugtragstruktur angeschlossen ist, sodass die auf die Armaturentafel einwirkenden Druckkräfte nur mittelbar über den zumindest einen Zuganker auf die Fahrzeugtragstruktur in Form von Zugkräften übertragen werden. Diese Ausführungsform kann sich insbesondere dann als vorteilhaft erweisen, wenn die Entfernung zwischen der Stelle, an der der zumindest eine Zuganker an der Armaturentafel befestigt ist, und einer möglichen Befestigungsstelle an der Schelle des Gasgenerators deutlich kürzer ist, als die Entfernung zu der Fahrzeugtragstruktur, da in diesem Falle infolge des kürzeren Kraftübertragungswegs geringere Verformungen auftreten, als wenn der Zuganker an der weiter entfernten Fahrzeugtragstruktur befestigt wäre.

Bei beiden zuvor erläuterten Ausführungsformen (mittelbare oder unmittelbare Kraftübertragung über den zumindest einen Zuganker) ist es möglich, dass der zumindest eine Zuganker an einem ersten Ende lösbar oder unlösbar bzw. einstückig mit der Fahrzeugtragstruktur bzw. mit der zumindest einen Generatorschelle verbunden ist. Den zumindest einen Zuganker als separat handhabbares Bauteil auszubilden, kann sich insbesondere dann als vorteilhaft erweisen, wenn nur wenig Platz auf der dem Fahrgastraum abgewandten Seite der Armaturentafel zur Verfügung steht. In diesem Falle können die Zuganker nach ordnungsgemäßer Positionierung der Luftsackaufnahmehülle einzeln montiert werden, wofür der vorhandene Raum in aller Regel ausreichend sein wird. Andererseits kann es sich jedoch auch als vorteilhaft erweisen, die Zuganker einstückig mit der zumindest einen Generatorschelle auszubilden, da in diesem Falle die gesamte Luftsackbaugruppe als einstückige Einheit als Ganzes positioniert und montiert werden kann, wodurch der Montageaufwand reduziert wird.

Da es sich bei den Zugankern um von der Armaturentafel separat handhabbare Bauteile handelt, können diese an ihrem dem ersten Ende gegenüberliegenden zweiten Ende jeweils eine Aufnahme oder Öffnung aufweisen, welche dazu dient, um geeignete Befestigungsmittel zur Befestigung des jeweiligen Zugankers an der Armaturentafel aufnehmen zu können. So können die Zuganker beispielsweise an ihren dem ersten Ende gegenüberliegenden zweiten Ende jeweils eine Öffnung zur Aufnahme eines zur Anbringung des Zugankers an der Armaturentafel geeigneten Befestigungsmittel aufweisen. Bei diesen Befestigungsmitteln kann es sich beispielsweise um an der Rückseite der Armaturentafel angeformte Rasthaken handeln, welche formschlüssig in die an dem zweiten Ende des jeweiligen Zugankers ausgebildete Öffnung einschnappen oder -rasten können. Alternativ dazu kann es sich bei den genannten Befestigungsmitteln auch beispielsweise um an der Rückseite der Armaturentafel vorgesehene Gewindestifte handeln, über die die Zuganker mit der Rückseite der Armaturentafel mit Hilfe von auf die Gewindestifte aufschraubbaren Muttern verschraubt werden können.

Da die mittelbar oder unmittelbar mit der Fahrzeugtragstruktur verbundenen Zuganker somit über die zuvor genannten Befestigungsmittel auch zugfest mit der Armaturentafel verbunden sind, wird durch die Zuganker in Verbindung mit der Fahrzeugtragstruktur gewissermaßen ein Widerlager für den sich während eines Crashs expandierenden Luftsack gebildet, durch das verhindert wird, dass sich der Luftsack auf der Rückseite der Armaturentafel ausdehnen kann. Es kann somit sichergestellt werden, dass der sich expandierende Luftsack ausschließlich in Richtung des Fahrgastraums ausdehnen und somit durch eine in der Armaturentafel ausgebildete Luftsackklappe ins Innere des Fahrgastraums eindringen kann, um sich dort zu entfalten.

Wie bereits zuvor erläutert wurde, ist der Gasgenerator mittels einer Schelle oder Schlaufe an der Fahrzeugtragstruktur rückverankert. Um zur Anbindung der Luftsackaufnahmehülle an dem Gasgenerator kein zusätzliches Befestigungsmittel vorsehen zu müssen, ist es gemäß einer weiteren Ausführungsform vorgesehen, dass die zumindest eine Schelle einen ersten und einen zweiten Schalenabschnitt umfasst, welche sich zusammen zu jeweils einer den Gasgenerator umgebenden Schelle ergänzen. Bei dieser Ausführungsform ist es vorgesehen, dass sich der erste Schalenabschnitt innerhalb und der zweite Schalenabschnitt außerhalb der Luftsackaufnahmehülle befindet, sodass durch gegenseitiges Verspannen der beiden Schalenabschnitte die Luftsackaufnahmehülle an dem Gasgenerator gesichert bzw. gegen diesen verspannt ist.

Im Falle, dass der Gasgenerator mit zwei oder noch mehr Schellen an der Fahrzeugtragstruktur befestigt ist, kann es gemäß einer weiteren bevorzugten Ausführungsform vorgesehen sein, dass die ersten und zweiten Schalenabschnitte der einzelnen Schellen über gegeneinander verspannbare Klemmflansche untereinander verbunden sind, sodass die den ersten Schalenabschnitten zugeordneten Klemmflansche mit den den zweiten Schalenabschnitten zugeordneten Klemmflanschen verspannt werden können, wodurch die Luftsackaufnahmehülle besonders effektiv an dem Gasgenerator gesichert ist.

Da der bzw. die ersten Schalenabschnitte innerhalb der Luftsackaufnahmehülle und vorzugsweise auch innerhalb des Luftsacks angeordnet sind, kann es sich gemäß einer weiteren bevorzugten Ausführungsform als vorteilhaft erweisen, an den ersten Schalenabschnitten bzw. an einem derer Klemmflansche ein Gasumlenkblech vorzusehen, welches derart geformt und relativ in Bezug auf die Gasausströmöffnung des Gasgenerators positioniert ist, dass die daraus ausströmenden Gase eine gewünschte Richtungsänderung erfahren. Auf diese Weise können beispielsweise die aus dem Gasgenerator ausströmenden Gase gezielt in Richtung der Sollbruchstelle der in der Armaturentafel ausgebildeten Luftsackaustrittsklappe und somit weg vom (Film)-Scharnier derselben geleitet werden. Der sich expandierende Luftsack gelangt somit infolge der Gasumlenkung durch das Gasumlenkblech gezielt in Kontakt mit der Sollbruchstelle der Luftsackaustrittsklappe, wodurch diese verzögerungsfrei aufreißen kann.

Um für die Befestigung der Gewebeabschnitte an der Rückseite der Armaturentafel keine zusätzlichen Befestigungsmittel vorsehen zu müssen, sind die Gewebeabschnitte derart ausgebildet und an der Luftsackaufnahmehülle angeordnet, dass sie mittels des zumindest einen Zugankers an der Armaturentafel befestigbar sind. So können die Gewebeabschnitte beispielsweise über die zuvor beschriebenen Zuganker mit der Rückseite der Armaturentafel verspannt sein, sodass zur Befestigung der Gewebeabschnitte keine weiteren Befestigungsmittel erforderlich werden.

Gemäß einer weiteren Ausführungsform kann es sich in produktionswirtschaftlicher Hinsicht als vorteilhaft erweisen, die Luftsackaufnahmehülle durch einen Gewebeabschnitt des Luftsacks selbst zu bilden oder umgekehrt, sodass die Luftsackaufnahmehülle bereits während der Fertigung bzw. des Nähvorgangs des Luftsacks zusammen mit diesem gefertigt werden kann. So kann es sich beispielsweise bei der Luftsackaufnahmehülle um eine großzügig dimensionierte Gewebezugabe des Gewebematerials handeln, aus dem der Luftsack selbst gefertigt ist, sodass nach dem Nähvorgang des Luftsacks derselbe in die Gewebezugabe eingeschlagen und mit dieser vernäht werden kann.

Im Folgenden wird nun die Erfindung rein exemplarisch anhand mehrerer beispielhafter Ausführungsformen unter Bezugnahme auf die beigefügten Zeichnungen beschrieben, wobei:
- Fig. 1 :: eine Querschnittsdarstellung durch eine erfindungsgemäße Luftsackbaugruppe gemäß einer ersten Ausführungsform zeigt;
- Fig. 2 :: eine Querschnittsdarstellung durch eine erfindungsgemäße Luftsackbaugruppe gemäß einer zweiten Ausführungsform zeigt;
- Fig. 3: eine Querschnittsdarstellung durch eine erfindungsgemäße Luftsackbaugruppe gemäß einer dritten Ausführungsform zeigt;
- Fig. 4: eine Querschnittsdarstellung durch eine erfindungsgemäße Luftsackbaugruppe gemäß einer vierten Ausführungsform zeigt;
- Fig. 5: eine Querschnittsdarstellung durch eine erfindungsgemäße Luftsackbaugruppe gemäß einer fünften Ausführungsform zeigt;
- Fig. 6: eine Querschnittsdarstellung durch eine erfindungsgemäße Luftsackbaugruppe gemäß einer sechsten Ausführungsform zeigt; und
- Fig. 7: eine perspektivische Darstellung einer Klemmschale zeigt, welche aus mehreren durch Klemmflansche miteinander verbundenen ersten Schalenabschnitten besteht.

In der folgenden Figurenbeschreibung sind in den einzelnen Figuren einander entsprechende Bauteile mit gleichen Bezugszeichen gekennzeichnet.

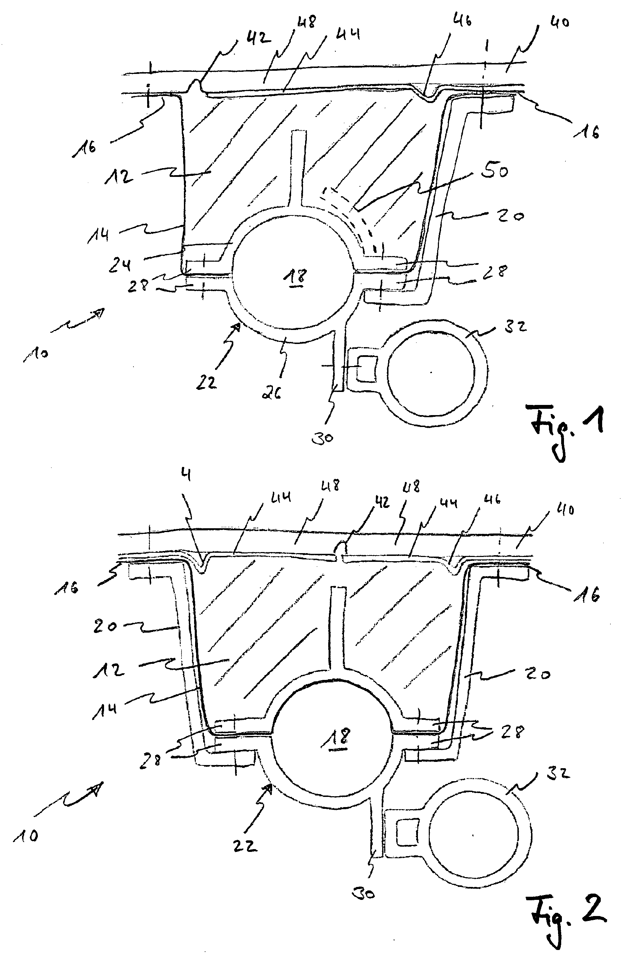

Die Fig. 1 zeigt die Einbausituation einer Luftsackbaugruppe 10 gemäß einer ersten Ausführungsform an der dem Fahrgastraum abgewandten Seite einer Armaturentafel 40. Die Armaturentafel 40 weist auf ihrer Rückseite eine Sollbruchstelle 42 auf, welche durch eine Materialausnehmung in der Rückseite der Armaturentafel 40 gebildet wird. Die Armaturentafel 40 ist auf ihrer Rückseite ferner mit einer Verstärkungslage 44 aus beispielsweise einem Gewebematerial beschichtet. Die Verstärkungslage 44 bildet eine parallel zu der Sollbruchstelle 42 verlaufende Lasche 46 aus, wodurch in der Armaturentafel 40 im Bereich zwischen der Sollbruchstelle 42 und der Lasche 46 eine Luftsackaustrittsklappe 48 mit einem definierten Filmscharnier im Bereich entlang der Lasche 46 gebildet wird.

Die auf der Rückseite der Armaturentafel 40 befindliche Luftsackbaugruppe 10 weist in der in der Fig. 1 dargestellten Ausführungsform eine aus einem Gewebematerial gefertigte längliche Luftsackaufnahmehülle 14 auf, welche im Querschnitt der Fig. 1 eine im Wesentlichen rechteckförmige Gestalt aufweist. Die Luftsackaufnahmehülle 14 ist dabei in der in der Fig. 1 dargestellten Ausführungsform auf jener Seite, welche an der Armaturentafel 40 zu liegen kommt, geöffnet, sodass die Luftsackaufnahmehülle 14 anschaulich die Form einer offenen Schachtel aufweist. Die Luftsackaufnahmehülle 14 weist entlang ihres Öffnungsrandes zwei quer zur Längsrichtung der Luftsackaufnahmehülle 14 voneinander beabstandete Gewebeabschnitte 16 auf, über die die Luftsackaufnahmehülle 14 an der Rückseite der Armaturentafel 40 befestigt ist.

Innerhalb der Luftsackaufnahmehülle 14 ist ein nur schematisch dargestellter, zusammengefalteter Luftsack 12 angeordnet, welcher dazu bestimmt ist, um im Crashfall durch die Luftsackaustrittsklappe 48 in den Fahrgastraum einzudringen. Um den Luftsack 12 hierzu aufblasen zu können, weist die Luftsackbaugruppe 10 ferner einen stabförmigen Gasgenerator 18 auf, welcher derart mit dem Luftsack 12 in Wirkverbindung steht, dass die im Crashfall von dem Gasgenerator 18 erzeugten Gase durch einen in dem Luftsack 12 ausgebildeten Einblasmund in den Innenraum des Luftsacks 12 gelangen können, wodurch dieser sich ausdehnt. Dies hat zur Folge, dass die Luftsackaustrittsklappe 48 entlang der Sollbruchstelle 42 der Armaturentafel 40 aufplatzt und um das Filmscharniers entlang der Lasche 46 verschwenkt wird, sodass der Luftsack 12 durch die so entstandene Öffnung in der Armaturentafel 40 in den Fahrgastraum gelangen kann.

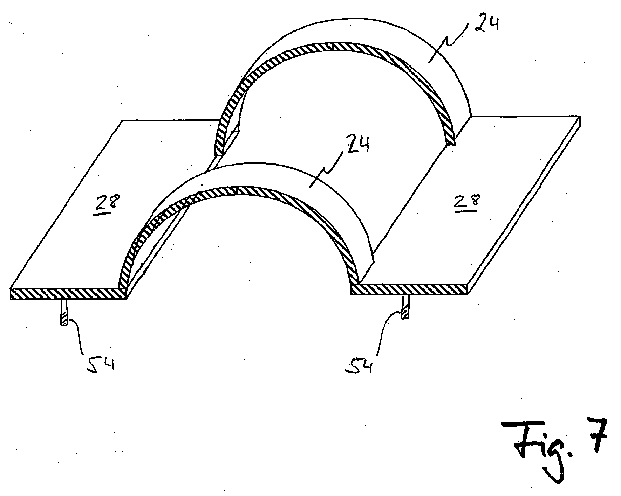

Damit nicht das ganze Gewicht des Gasgenerators 18 über die Luftsackaufnahmehülle 14 in die Armaturentafel 40 eingeleitet wird, ist der Gasgenerator von zwei in Längsrichtung des stabförmigen Gasgenerators 18 versetzten Schellen 22 umgeben, über die der Gasgenerator 18 an einer Fahrzeugtragstruktur 32 in Form eines Fahrzeugquerträgers befestigt ist. Die Schellen 22 bestehen dabei im Wesentlichen aus einem ersten Schalenabschnitt 24 und einem zweiten Schalenabschnitt 26, welche jeweils eine im Wesentlichen halbkreisförmige Aufnahme aufweisen. An ihren freien Enden weisen die beiden Schalenabschnitte 24, 26 jeweils zwei radial abstehende Klemmflansche 28 auf, über die die beiden Schalenabschnitte 24, 26 zur Fixierung des Gasgenerators 18 gegeneinander verspannt werden können. Wie am besten der Fig. 7 entnommen werden kann, können die Klemmflansche 28 eine längliche, in Längsrichtung des Gasgenerators 18 verlaufende Gestalt aufweisen und einstückig mit den jeweiligen Schalenabschnitten 24, 26 verbunden sein, sodass die beiden ersten Schalenabschnitte 24 und die beiden zweiten Schalenabschnitte 26 als einstückige Einheit in Form der in der Fig. 7 dargestellten Klemmschale gemeinsam handhabbar sind.

Wie der Fig. 1 entnommen werden kann, befinden sich die beiden ersten Schalenabschnitte 24 innerhalb der Luftsackaufnahmehülle 14, wohingegen die beiden zweiten Schalenabschnitte 26 außerhalb der Luftsackaufnahmehülle 14 positioniert sind, sodass durch Verspannen der beiden Schalenabschnitte 24, 26 die Luftsackaufnahmehülle 14 zwischen den jeweiligen Klemmflanschen 28 festgeklemmt und somit am Gasgenerator 18 gesichert ist. Der Gasgenerator 18 kann dabei innen- oder außenliegend der Luftsackaufnahmehülle 14 positioniert sein, wobei in jedem Falle in der Luftsackaufnahmehülle 14 eine Öffnung für entweder die elektrische Verkabelung des Gasgenerators 18 (innenliegender Gasgenerator) oder die Gaseinleitung in den Luftsack 12 (außenliegender Gasgenerator) vorgesehen sein muss.

Wie der Fig. 1 ferner entnommen werden kann, weisen die zweiten Schalenabschnitte 26 einen davon abstehenden Befestigungsflansch 30 auf, über den die zweiten Befestigungsflansche 26 an der Fahrzeugtragstruktur 32 befestigt sind, wodurch das Gewicht des Gasgenerators 18 maßgeblich auf der Fahrzeugtragstruktur 32 lastet.

Wenn nun im Falle der Aktivierung des Gasgenerators 18 der sich ausdehnende Luftsack 12 gegen die Armaturentafel 40 und insbesondere die Luftsackaustrittsklappe 48 drückt, besteht im Falle, dass die Sollbruchstelle 42 der Armaturentafel 40 nicht sofort aufplatzt, die Gefahr, dass sich die Armaturentafel 40 in Richtung des Fahrgastraums verformt, was ein verzögertes Öffnen der Luftsackaustrittsklappe 48 zur Folge haben kann. Um einer derartigen unerwünschten Verformung der Armaturentafel 40 entgegenzuwirken, weist die erfindungsgemäße Luftsackbaugruppe 10 zumindest einen Zuganker 20 auf, über den die Druckkräfte, die infolge des Ausdehnens des Luftsacks 12 auf die Armaturentafel 40 einwirken, zumindest teilweise in Form von Zugkräften auf die Fahrzeugtragstruktur 32 übertragen werden. In der in der Fig. 1 dargestellten Ausführungsform wird die Luftsackaufnahmehülle 14 auf Seiten des durch die Verstärkungslagelasche 46 gebildeten Filmscharniers in der Armaturentafel 40 durch mehrere im Wesentlichen Z-förmige Zuganker 20 beflankt, welche mit ihren Flanschen einerseits an der Generatorschelle 22 bzw. dem Klemmflansch 28 des zweiten Schalenabschnitts 26 und andererseits an der Armaturentafel 40 befestigt sind. Die auf die Armaturentafel 40 infolge des Ausdehnens des Luftsacks 12 einwirkenden Druckkräfte, welche gerade im Bereich des Filmscharniers der Luftsackaustrittsklappe 48 am größten sind, werden somit über die Zuganker 20 in Form von Zugkräften auf die Generatorschellen 22 und von dort in die Fahrzeugtragstruktur 32 zurück geleitet, wodurch einer unerwünschten Verformung der Armaturentafel 40 infolge des Ausdehnens des Luftsacks 12 entgegengewirkt werden kann. Es wird somit ein voraussagbares, reproduzierbares und berechenbares Öffnungsverhalten der Luftsackaustrittsklappe 48 gewährleistet.

In der in der Fig. 1 dargestellten Ausführungsform ist der Gewebeabschnitt 16 der Luftsackaufnahmehülle 14 zwischen den armaturentafelseitigen Flansch der Zuganker 20 und die Armaturentafel 40 eingeklemmt, sodass keine zusätzlichen Befestigungsmittel zur Befestigung des Gewebeabschnitts 16 vorgesehen werden müssen. Der schellenseitige Flansch der Zuganker 20 ist an dem zweiten Schalenabschnitt 26 mit demselben Befestigungsmittel gesichert, über das die Klemmflansche 28 der Schalenabschnitte 24, 26 miteinander verspannt sind, sodass auch zur Befestigung des Zugankers 20 an der Schelle 22 keine zusätzlichen Befestigungsmittel benötigt werden.

Die in der Fig. 2 dargestellte Ausführungsform einer erfindungsgemäßen Luftsackbaugruppe 10 entspricht im Wesentlichen der zuvor unter Bezugnahme auf die Fig. 1 erläuterten Ausführungsform. Im Unterschied zu der zuvor erläuterten Ausführungsform weist die in der Fig. 2 dargestellte Luftsackbaugruppe 10 auf einander gegenüberliegenden Seiten der Luftsackaufnahmehülle 14 mehrere Zuganker 20 auf, welche in der zuvor erläuterten Art und Weise sowohl mit der Armaturentafel 40 als auch dem zweiten Schalenabschnitt 26 der Schellen 22 verbunden sind. Dass bei der in der Fig. 2 dargestellten Ausführungsform beiderseits der Luftsackaufnahmehülle 14 Zuganker 20 vorgesehen sind, ist maßgeblich darauf zurückzuführen, dass dort die Sollbruchstelle 42 der Armaturentafel 40 mittig in Bezug auf die Luftsackbaugruppe 10 verläuft, wodurch eine zweiflügelige Luftsackaustrittsklappe 48 mit zwei Verstärkungslagelaschen 46 gebildet wird. Da die Armaturentafel 40 gerade im Bereich der durch die Verstärkungslagelaschen 46 definierten Filmscharniere in der Armaturentafel 40 am steifsten ist, ziehen diese Bereiche während der anfänglichen Ausdehnung des Luftsacks 12 die meisten Druckkräfte an, weshalb bei der in der Fig. 2 dargestellten Ausführungsform die Armaturentafel 40 beiderseits der Luftsackaufnahmehülle 14 über Zugsanker 20 mittelbar an der Fahrzeugtragstruktur 32 rückverankert ist.

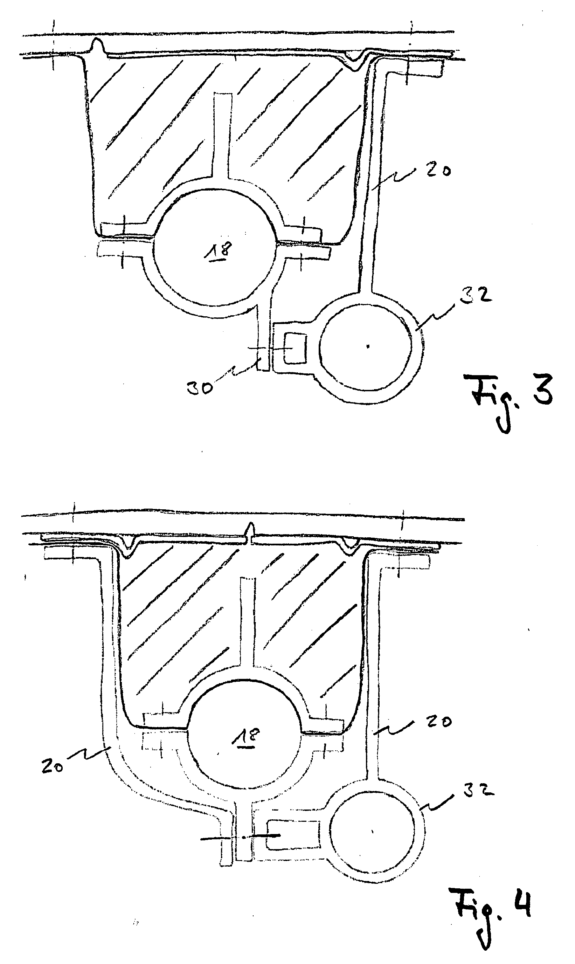

Die in der Fig. 3 dargestellte Ausführungsform einer erfindungsgemäßen Luftsackbaugruppe 10 entspricht bis auf die Tatsache, dass dort die Zuganker 20 nicht mit der Schelle 22 sondern einstückig mit der Fahrzeugtragstruktur 32 verbunden sind, wiederum der in der Fig. 1 dargestellten Ausführungsform, sodass bezüglich der weiteren Details auf die Erläuterungen zur Fig. 1 verwiesen werden können.

Die in der Fig. 4 dargestellte Ausführungsform einer Luftsackbaugruppe 10 basiert auf der in der Fig. 3 dargestellten Ausführungsform. Da bei der Ausführungsform der Fig. 4 jedoch die Sollbruchstelle 42 der Armaturentafel 40 wie bei der in der Fig. 2 dargestellten Ausführungsform mittig in Bezug auf die Luftsackbaugruppe 10 verläuft, wird bei der in der Fig. 4 dargestellten Ausführungsform die Luftsackaufnahmehülle 14 analog zur Fig. 2 beiderseits durch Zuganker 20 beflankt, welche die Armaturentafel 40 an der Fahrzeugtragstruktur 32 rückverankern. Im Unterschied zu der Ausführungsform der Fig. 2 sind bei der in der Fig. 4 dargestellten Ausführungsform die gegenüber der Fig. 3 zusätzlichen Zuganker 20 unmittelbar mit der Fahrzeugtragstruktur 32 lösbar verbunden.

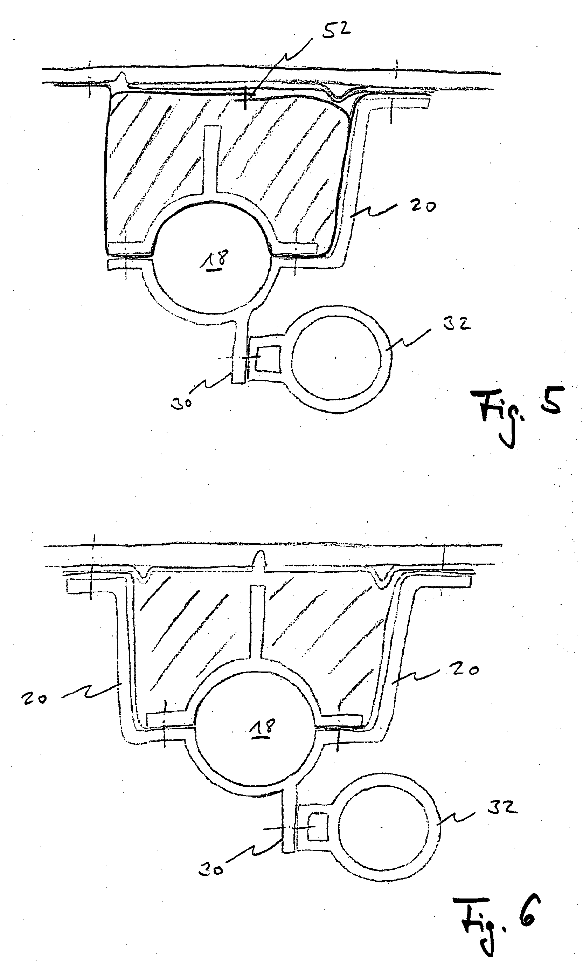

Die in der Fig. 5 dargestellte Ausführungsform entspricht wiederum im Wesentlichen der zuvor unter Bezugnahme auf die Fig. 1 erläuterten Ausführungsform. Im Unterschied zu der in der Fig. 1 dargestellten Ausführungsform sind jedoch die Zuganker 20 einstückig mit dem zweiten Schalenabschnitt 26 bzw. dessen Klemmflansch 28 verbunden. Darüber hinaus unterscheidet sich die in der Fig. 5 dargestellte Ausführungsform von der in der Fig. 1 dargestellten dadurch, dass die Luftsackaufnahmehülle 14 auf der Seite, die mit der Armaturentafel 40 in Anlage gelangt, geschlossen ist. Die Luftsackaufnahmehülle 14 weist somit eine umlaufend geschlossene Gestalt auf, wobei auf der Seite, mit der die Luftsackaufnahmehülle 14 mit der Armaturentafel 14 in Anlage gelangt, eine Reißnaht 52 vorgesehen ist, entlang derer der expandierende Luftsack 12 aus der Luftsackaufnahmehülle 14 austreten kann.

Obwohl die in den Fig. 1 bis 4 und auch in der Fig. 6 dargestellten Luftsackbaugruppen 10 Luftsackaufnahmehüllen 14 aufweisen, welche auf Seiten der Armaturentafel 40 geöffnet sind, sei der Vollständigkeit halber an dieser Stelle erwähnt, dass auch diese Luftsackbaugruppen 10 mit einer umfangseitig geschlossenen Luftsackaufnahmehülle 14 ausgestattet sein können, wie sie unter Bezugnahme auf die Fig. 5 beschrieben wurde.

Die in der Fig. 6 dargestellte Ausführungsform einer Luftsackbaugruppe 10 entspricht wiederum im Wesentlichen der unter Bezugnahme auf die Fig. 2 beschriebenen Ausführungsform, wobei im Unterschied zu der Fig. 2 jedoch sämtliche Zuganker 20 mit den zweiten Schalenabschnitten 26 bzw. deren Klemmflanschen 28 einstückig und unlösbar verbunden sind.

Zwar können bei der in der Fig. 1 dargestellten Ausführungsform einer Luftsackbaugruppe 10 die im Bereich des Filmscharniers bzw. der Verstärkungslagelasche 46 auf die Armaturentafel 40 einwirkenden Druckkräfte effektiv über die Zuganker 20 zurück in die Fahrzeugtragstruktur 32 übertragen werden. Um eine weitere Entlastung der Armaturentafel 40 auf Seiten der Zuganker 20 bzw. des durch die Verstärkungslagelasche 46 definierten Filmscharniers in der Armaturentafel 40 zu erreichen, weist der erste Schalenabschnitt 24 der Schelle 22 ein gekrümmtes Gasumlenkblech 50 auf, durch das die aus dem Gasgenerator 18 ausströmenden Gase gezielt in Richtung der Sollbruchstelle 42 der Armaturentafel 40 geleitet werden, sodass diese dort unmittelbar nach Aktivierung des Gasgenerators 18 aufreißen kann. Durch das Gasumlenkblech 50, welches beispielsweise von einem der Klemmflansche 28 auskragen kann, wird somit die Armaturentafel 40 während des Ausdehnens des Luftsacks 12 im Bereich des Filmscharniers der Luftsackaustrittsklappe 48 entlastet, sodass sich diese nicht in unerwünschter Weise während der Aktivierung des Gasgenerators 18 in Richtung des Fahrgastraums verformen kann.

Der Vollständigkeit halber sei an dieser Stelle erwähnt, dass auch bei den in den Fig. 3 und 5 dargestellten Luftsackbaugruppen 10, bei denen die Sollbruchstelle 42 der Armaturentafel 40 exzentrisch angeordnet ist, ein Gasumlenkblech 50, wie es unter Bezugnahme auf die Fig. 1 beschrieben wurde, zum Einsatz kommen kann.

### Bezugszeichenliste

- 10: Luftsackbaugruppe
- 12: Luftsack
- 14: Luftsackaufnahmehülle
- 16: Gewebeabschnitte
- 18: Gasgenerator
- 20: Zuganker
- 22: Schelle
- 24: erster Schalenabschnitt
- 26: zweiter Schalenabschnitt
- 28: Klemmflansche
- 30: Befestigungsflansch
- 32: Fahrzeugtragstruktur
- 40: Armaturentafel
- 42: Sollbruchstelle
- 44: Verstärkungslage
- 46: Lasche
- 48: Luftsackaustrittsklappe
- 50: Gasumlenkblech
- 52: Reißnaht
- 54: Gewindestift

## Patentansprüche

1. Baugruppe bestehend aus einer Fahrzeugtragstruktur (32), einer die Fahrzeugtragstruktur (32) verkleidenden Armaturentafel (40) und einer Luftsackbaugruppe (10) zur Aufnahme und Positionierung eines gefalteten Luftsacks (12) an der dem Fahrgastraum abgewandten Seite der Armaturentafel (40), wobei die Luftsackbaugruppe (10) umfasst:
- den Luftsack (12),
- eine aus einem Gewebematerial gefertigte Luftsackaufnahmehülle (14), die den gefalteten Luftsack (12) aufnimmt; und
- einen stabförmigen Gasgenerator (18), welcher derart mit dem Luftsack (12) in Wirkverbindung steht, dass der Luftsack (12) durch von dem Gasgenerator (18) erzeugbare Gase aufblasbar ist;
**dadurch gekennzeichnet,**
**dass** die aus einem Gewebematerial gefertigte Luftsackaufnahmehülle (14) zwei quer zur Längsrichtung der Luftsackaufnahmehülle (14) voneinander beabstandete Gewebeabschnitte (16) aufweist, die an der Rückseite der Armaturentafel (40) befestigt sind,
**dass** zumindest ein in Wirkverbindung mit der Armaturentafel (40) und der Fahrzeugtragstruktur (32) stehender Zuganker (20) vorgesehen ist, über den Druckkräfte, die infolge des Ausdehnens des Luftsacks (12) auf die Armaturentafel (40) einwirken, zumindest teilweise in Form von Zugkräften auf die von der Armaturentafel (40) verkleidete Fahrzeugtragstruktur (32) übertragen werden, und
**dass** der Gasgenerator (18) von zumindest einer Schelle (22) oder Schlaufe umgeben ist, über die der Gasgenerator (18) mit der Fahrzeugtragstruktur verbunden ist.

2. Baugruppe nach Anspruch 1,
**dadurch gekennzeichnet, dass**
mehrere Zuganker (20) vorgesehen sind, welche die Luftsackaufnahmehülle (14) beflankend, vorzugsweise auf einander gegenüberliegenden Seiten der Luftsackaufnahmehülle (14) angeordnet sind.

3. Baugruppe nach zumindest einem der vorstehenden Ansprüche,
**dadurch gekennzeichnet, dass**
der zumindest eine Zuganker (20) die infolge des Ausdehnens des Luftsacks (12) auf die Armaturentafel (40) einwirkenden Druckkräfte zumindest mittelbar auf die Fahrzeugtragstruktur (32) in Form von Zugkräften überträgt.

4. Baugruppe nach zumindest einem der vorstehenden Ansprüche,
**dadurch gekennzeichnet, dass**
der zumindest eine Zuganker (20) an einem ersten Ende lösbar oder einstückig mit der Fahrzeugtragstruktur (32) oder mit der zumindest einen Generatorschelle (22) verbunden ist.

5. Baugruppe nach Anspruch 4,
**dadurch gekennzeichnet, dass**
der zumindest eine Zuganker (20) an seinem dem ersten Ende gegenüberliegenden zweiten Ende eine Öffnung zur Aufnahme eines zur Anbringung des Zugankers (20) an der Armaturentafel (40) geeigneten Befestigungsmittels aufweist.

6. Baugruppe nach zumindest einem der vorangehenden Ansprüche,
**dadurch gekennzeichnet, dass**
die zumindest eine Schelle (22) einen ersten und einen zweiten Schalenabschnitt (24, 26) umfasst, wobei sich der erste Schalenabschnitt (24) innerhalb und der zweite Schalenabschnitt (26) außerhalb der Luftsackaufnahmehülle (14) befindet, so dass durch gegenseitiges Verspannen der beiden Schalenabschnitte (24, 26) die Luftsackaufnahmehülle (14) an dem Gasgenerator (18) gesichert ist.

7. Baugruppe nach Anspruch 6,
**dadurch gekennzeichnet, dass**
der zweite Schalenabschnitt (26) einen Befestigungsabschnitt (30) aufweist, über den er an der Fahrzeugtragstruktur (32) anbringbar ist.

8. Baugruppe nach zumindest einem der Ansprüche 6 oder 7,
**dadurch gekennzeichnet, dass**
mehrere erste und zweite Schalenabschnitte (24, 26) vorgesehen sind, welche über gegeneinander verspannbare Klemmflansche (28) untereinander verbunden sind.

9. Baugruppe nach zumindest einem der Ansprüche 6 bis 8,
**dadurch gekennzeichnet, dass**
der zumindest eine erste Schalenabschnitte (24) ein Gasumlenkblech (50) aufweist, welches derart geformt und relativ in Bezug auf die Gasausströmöffnung des Gasgenerators (18) positioniert ist, dass die daraus ausströmenden Gase eine Richtungsänderung erfahren.

10. Baugruppe nach einem der vorangehenden Ansprüche,
**dadurch gekennzeichnet, dass**
die Gewebeabschnitte (16) derart ausgebildet und an der Luftsackaufnahmehülle (14) angeordnet sind, dass sie mittels des zumindest einen Zugankers (20) an der Armaturentafel (40) befestigbar sind.

11. Baugruppe nach zumindest einem der vorstehenden Ansprüche,
**dadurch gekennzeichnet, dass**
die Luftsackaufnahmehülle (14) durch einen Gewebeabschnitt des Luftsacks (12) selbst gebildet wird.

12. Baugruppe nach zumindest einem der vorangehenden Ansprüche,
**dadurch gekennzeichnet, dass**
die Lüftsackaufnahmehülle (14) eine sich im Bereich zwischen den Gewebeabschnitten (16) erstreckende Sollreißnaht (52) aufweist.

## Claims

1. Assembly consisting of a vehicle support structure (32), an instrument panel (40) covering the vehicle support structure (32) and an airbag assembly (10) for taking up and positioning a folded airbag (12) on the side of the instrument panel (40) facing away from the passenger compartment, wherein the airbag assembly (10) comprises:
- the airbag (12),
- an airbag containment casing (14) manufactured from a woven fabric, which receives the folded airbag (12); and
- a rod-shaped gas generator (18), which is actively connected to the airbag (12) in such a way that the airbag (12) can be inflated by gases produced by the gas generator (18);
**characterised by** that the airbag containment casing (14) manufactured from a woven fabric has two woven sections (16) spaced from one another transversely to the longitudinal direction of the airbag containment casing (14), which sections are attached to the rear side of the instrument panel (40), that at least one tie rod (20) is provided actively connected to the instrument panel (40) and the vehicle support structure (32), via which tie rod pressure forces that are caused by the expansion of the airbag (12) and act on the instrument panel (40) are transmitted at least partially in the form of tensile forces to the vehicle support structure (32) covered by the instrument panel (40), and that the gas generator (18) is surrounded by at least one clamp (22) or loop, by which the gas generator (18) is connected to the vehicle support structure.

2. Assembly according to claim 1, **characterised by** that several tie rods (20) are provided, which flank the airbag containment casing (14), preferably on opposing sides of the airbag containment casing (14).

3. Assembly according to at least one of the preceding claims, **characterised by** that the at least one tie rod (20) transmits the pressure forces, which are caused by the expansion of the airbag (12) and act on the instrument panel (40), at least directly to the vehicle support structure (32) in the form of tensile forces.

4. Assembly according to at least one of the preceding claims, **characterised by** that the at least one tie rod (20) is connected at a first end detachably or in one piece to the vehicle support structure (32) or to the at least one generator clamp (22).

5. Assembly according to claim 4, **characterised by** that the at least one tie rod (20) has at its second end opposing the first end an opening for taking up an attachment means suitable for affixing the tie rod (20) to the instrument panel (40).

6. Assembly according to at least one of the preceding claims, **characterised by** that the at least one clamp (22) comprises a first and a second shell section (24, 26), wherein the first shell section (24) is located inside and the second shell section (26) located outside the airbag containment casing (14), so that by reciprocal tensioning of the two shell sections (24, 26) the airbag containment casing (14) is secured on the gas generator (18).

7. Assembly according to claim 6, **characterised by** that the second shell section (26) has an attachment section (30), by which it can be affixed to the vehicle support structure (32).

8. Assembly according to at least one of claims 6 or 7, **characterised by** that a plurality of first and second shell sections (24, 26) are provided, which are connected to one another by clamping flanges (28) that can be tensioned relative to one another.

9. Assembly according to at least one of claims 6 to 8, **characterised by** that the at least one first shell section (24) has a gas deflection plate (50), which is shaped and positioned relative to the gas outflow opening of the gas generator (18) in such a way that the gases flowing out experience a change of direction.

10. Assembly according to one of the preceding claims, **characterised by** that the woven sections (16) are formed and arranged on the airbag containment casing (14) in such a way that they can be attached by means of the at least one tie rod (20) to the instrument panel (40).

11. Assembly according to at least one of the preceding claims, **characterised by** that the airbag containment casing (14) is formed by a woven section of the airbag (12) itself.

12. Assembly according to at least one of the preceding claims, **characterised by** that the airbag containment casing (14) has a tear seam (52) extending in the area between the woven sections (16).

## Revendications

1. Module constitué d'une structure porteuse du véhicule (32), d'un tableau de bord (40) recouvrant la structure porteuse du véhicule (32) et d'un module de coussin d'air (10) destiné à recevoir et à positionner un sac gonflable plié (12) sur le côté du tableau de bord (40) qui est opposé à l'espace occupé par le passager, le module de coussin d'air (10) comprenant :
- le sac gonflable (12),
- un logement de sac gonflable (14) en matériau textile, recevant le sac gonflable (12) plié ; et
- un générateur de gaz (18) en forme de barre, agencé en relation fonctionnelle avec le sac gonflable (12) de façon que le sac gonflable (12) puisse se gonfler sous l'effet des gaz produits par le générateur de gaz (18) ;
**caractérisé en ce que**
le logement de sac gonflable (14) en matériau textile présente deux sections textiles (16) qui sont espacées l'une de l'autre transversalement au sens longitudinal du logement de sac gonflable (14) et sont fixées au dos du tableau de bord (40), au moins une ancre de traction (20) est disposée en relation fonctionnelle avec le tableau de bord (40) et la structure porteuse du véhicule (32) et permet la transmission au moins partielle des forces de pression, exercées sur le tableau de bord (40) sous l'effet du dépliage du sac gonflable (12), sous la forme de forces de traction, sur une structure porteuse du véhicule (32) recouverte par le tableau de bord (40), et
le générateur de gaz (18) est entouré d'au moins un collier (22) ou d'au moins une éclisse permettant de relier le générateur de gaz (18) à la structure porteuse du véhicule.

2. Module selon la revendication 1,
**caractérisé en ce que**
plusieurs ancres de traction (20) sont présentes et flanquent le logement de sac gonflable (14), de préférence sur des côtés opposés du logement de sac gonflable (14).

3. Module selon l'une au moins des revendications précédentes,
**caractérisé en ce que**
l'au moins une ancre de traction (20) transmet au moins indirectement sur la structure porteuse du véhicule (32), sous la forme de forces de traction, les forces de pression exercées sur le tableau de bord (40) sous l'effet du dépliage du sac gonflable (12).

4. Module selon l'une au moins des revendications précédentes,
**caractérisé en ce que**
une première extrémité de l'au moins une ancre de traction (20) est raccordée, de manière amovible ou solidaire, à la structure porteuse du véhicule (32) ou à l'au moins un collier (22) du générateur.

5. Module selon la revendication 4,
**caractérisé en ce que**
la deuxième extrémité de l'au moins une ancre de traction (20), opposée à la première extrémité, présente une ouverture destinée à recevoir un moyen de fixation adapté à l'agencement de l'ancre de traction (20) sur le tableau de bord (40).

6. Module selon l'une au moins des revendications précédentes,
**caractérisé en ce que**
l'au moins un collier (22) comprend une première et une seconde section arrondie (24, 26), la première section arrondie (24) se trouvant à l'intérieur et la seconde section arrondie (26) se trouvant à l'extérieur du logement de sac gonflable (14) de manière que, par un serrage l'une contre l'autre des deux sections arrondies (24, 26), le logement de sac gonflable (14) est fixé au générateur de gaz (18).

7. Module selon la revendication 6,
**caractérisé en ce que**
la seconde section arrondie (26) présente une section de fixation (30) grâce à laquelle elle peut être agencée sur la structure porteuse du véhicule (32).

8. Module selon l'une au moins des revendications 6 et 7,
**caractérisé en ce que**
il est prévu plusieurs premières et secondes sections arrondies (24, 26) mutuellement reliées par des brides de serrage (28) susceptibles d'être serrées l'une contre l'autre.

9. Module selon l'une au moins des revendications 6 à 8,
**caractérisé en ce que**
l'au moins une première section arrondie (24) présente un déflecteur de gaz (50) dont la forme et la position par rapport à l'ouverture de sortie de gaz du générateur de gaz (18) sont telles que les gaz sortant de celui-ci subissent une déviation.

10. Module selon l'une des revendications précédentes,
**caractérisé en ce que**
les sections textiles (16) sont conçues et disposées par rapport au logement de sac gonflable (14) de manière à pouvoir être fixées sur le tableau de bord (40) au moyen de l'au moins une ancre de traction (20).

11. Module selon l'une au moins des revendications précédentes,
**caractérisé en ce que**
le logement de sac gonflable (14) est constitué d'une section textile du sac gonflable (12) lui-même.

12. Module selon l'une au moins des revendications précédentes,
**caractérisé en ce que**
le logement de sac gonflable (14) présente une couture fusible (52) qui s'étend dans la zone séparant les sections textiles (16).
